# FASCICULE DE BREVET EUROPEEN

(11) **EP 3 882 136 B1**
(45) Date de publication et mention de la délivrance du brevet: **29.06.2022**
(21) Numéro de dépôt: 21163553.7
(22) Date de dépôt: 18.03.2021
(51) Int. Cl.: B64C 25/40

(54) **DISPOSITIF D'ENTRAINEMENT D'AU MOINS UNE ROUE D'UN TRAIN D'ATTERRISSAGE D'AERONEF**
VORRICHTUNG ZUM ANTRIEB MINDESTENS EINES RADS EINES LUFTFAHRZEUGFAHRWERKS
DEVICE FOR DRIVING AT LEAST ONE WHEEL OF AN AIRCRAFT LANDING GEAR

(30) Priorité: 19.03.2020 FR 2002714
(43) Date de publication de la demande: 22.09.2021
(73) Titulaire: Safran Transmission Systems, 92700 Colombes (FR)
(72) Inventeur: SERHAL,, Jad, 77550 MOISSY-CRAMAYEL (FR)
(74) Mandataire: Gevers & Orès

(56) Documents cités:
- DE-B- 1 284 238
- US-A1- 2016 214 708
- US-A1- 2017 001 719
- US-A1- 2018 170 530

## Description

### Domaine technique de l'invention

La présente invention concerne notamment un dispositif d'entraînement d'au moins une roue d'un train d'atterrissage d'aéronef.

### Arrière-plan technique

Un aéronef comprend des trains d'atterrissage équipés de roues pour les déplacements de l'aéronef au sol sur un tarmac. Ce roulage aussi appelé taxiage (de l'anglais taxiing) peut être obtenu en propulsant l'aéronef grâce à ces turbomachines.

Pour limiter la consommation de carburant et l'impact sur l'environnement, il est connu de réaliser ce taxiage de manière électrique. Le taxiage électrique est obtenu en entraînant les roues d'un train d'atterrissage par un moteur électrique.

La présente demande propose un perfectionnement aux technologies existantes et concerne ainsi un dispositif à moteur électrique pour l'entraînement d'au moins une roue d'un train d'atterrissage d'aéronef.

La transmission de puissance entre deux arbres mécaniques rotatifs peut être réalisée de différentes façons. Dans le domaine éloigné des turbomachines d'aéronef, il est connu d'utiliser un réducteur mécanique pour assurer cette transmission. Le rôle d'un réducteur mécanique est de modifier le rapport de vitesse et de couple entre l'entrée et la sortie d'un système de transmission.

Il existe de nombreux types de réducteurs par exemple différentiels, planétaires, épicycloïdaux, à lignes intermédiaires, à étages de réduction en série, etc.

L'état de l'art dans le domaine des réducteurs à lignes intermédiaires pour une turbomachine d'aéronef comprend notamment les documents FR-A1-3 020 854, FR-A1-3 026 452, FR-A1-3 031 562, FR-A1-3 034 158.

Une solution consistant à utiliser un réducteur pour transmettre la puissance d'un moteur électrique à une roue d'un train d'atterrissage n'a pas encore été envisagée car l'intégration d'un tel réducteur dans cet environnement présenterait des inconvénients avec la plupart des technologies actuelles de réducteur. Par exemple, un réducteur avec des étages de réduction en séries occupe un espace important et possède une masse relativement élevée, ce qui rend son intégration complexe et réduit son efficacité. L'utilisation d'un réducteur planétaire serait intéressante en termes de masse. Cependant, elle impliquerait d'avoir des entrées et sortie coaxiales. Par conséquent, cette solution engendrerait des problématiques d'intégration sur le train d'atterrissage.

Il existe donc un besoin d'une solution de transmission mécanique entre le moteur électrique et la roue du train d'atterrissage.

Les documents US 2017/0001719 A1 et US 2016/0214708 A1 proposent des exemples d'une transmission mécanique entre un moteur électrique et une roue d'un train d'atterrissage mais ne résolvent que partiellement les inconvénients précités.

### Résumé de l'invention

L'invention concerne un dispositif d'entraînement d'au moins une roue d'un train d'atterrissage d'aéronef, ce dispositif comportant :
- au moins une roue de train d'atterrissage, cette roue comportant une jante entraînée en rotation par un arbre d'entraînement de jante,
- un moteur électrique comportant un arbre, et
- un système de transmission mécanique de l'arbre du moteur à l'arbre d'entraînement de jante, le système comprenant un réducteur mécanique comportant :
   - une ligne d'entrée accouplée à l'arbre du moteur et comportant une roue menée et un pignon menant,
   - une ligne de sortie comportant une roue menée et portée par ledit arbre d'entraînement de jante, et
   - deux lignes intermédiaires de transmission comportant chacune une roue menée par le pignon de la ligne d'entrée et un pignon menant la roue de l'arbre d'entraînement de jante
      caractérisé en ce que la ligne d'entrée comprend un arbre flottant dont une première extrémité comprend des cannelures engagées dans des cannelures complémentaires de l'arbre du moteur, et dont une seconde extrémité opposée comprend le pignon, ledit arbre flottant étant centré et guidé en rotation par au moins un palier et étant apte à rotuler à l'intérieur de ce palier.

L'invention propose ainsi d'utiliser un réducteur à lignes intermédiaires de transmission pour assurer la transmission de puissance entre l'arbre du moteur électrique et l'arbre d'entraînement de jante.

Cette invention présente de nombreux avantages. Tout d'abord, ce type de réducteur est peu encombrant du fait de la disposition des lignes intermédiaires et est donc particulièrement adapté à son montage dans cet environnement. Par ailleurs, l'utilisation des deux lignes intermédiaires permet de diviser par deux le couple d'entrée transmis par l'arbre du moteur électrique et de transmettre une moitié de ce couple par chacune des lignes intermédiaires. Les lignes intermédiaires peuvent donc être conçues de manière à résister à un couple moins important que celui appliqué à l'arbre du moteur électrique. Les couples sont ainsi ajustés et équilibrés entre les lignes. En outre, l'arbre flottant est avantageux dans la mesure où il permet d'équilibrer l'écart du couple entre les lignes intermédiaires dû aux défauts de fabrications, de montages et aux déformations.

Le dispositif selon l'invention peut comprendre une ou plusieurs des caractéristiques suivantes, prises isolément les unes des autres, ou en combinaison les unes avec les autres :
- les cannelures sont rectilignes et parallèles à un axe longitudinal de l'arbre flottant ;
- le pignon de l'arbre flottant et les roues des lignes intermédiaires sont à denture hélicoïdale ;
- ledit palier est situé au voisinage de ladite première extrémité ;
- le palier est du type à roulement ;
- le palier comprend deux rangées annulaires de rouleaux et une bague extérieure qui comprend une piste sphérique de roulement commune aux deux rangées de rouleaux ; ceci permet au palier de fonctionner avec un désalignement entre l'axe de rotation de la bague extérieure et celui de sa bague intérieure ;
- la roue de l'arbre d'entraînement de jante et les pignons des lignes intermédiaires sont à denture droite ;
- les deux lignes intermédiaires et au moins une partie de la ligne d'entrée sont logées dans un boîtier qui est situé à la périphérie externe de la roue de l'arbre d'entraînement de jante, ce boîtier comportant au moins une ouverture pour l'accouplement de cette roue aux pignons des lignes intermédiaires ;
- le boîtier comprend un corps et un couvercle rapporté sur le corps, le corps définissant une première chambre comportant les pignons des lignes intermédiaires et ladite ouverture pour le passage de la roue de l'arbre d'entraînement de jante, et le couvercle définissant une seconde chambre comportant le pignon de la ligne d'entrée et les roues des lignes intermédiaires, lesdites première et seconde chambres étant étanches l'une par rapport à l'autre ;
- la première chambre comprend une graisse de lubrification des engrènements et la seconde chambre comprend une huile de barbotage des engrènements ; on comprend ainsi que les lubrifications des engrenages à grande vitesse (dans la seconde chambre) et à faible vitesse (dans la première chambre) sont distinctes, ce qui permet de les ajuster indépendamment l'une de l'autre.

La présente invention concerne encore un aéronef comportant au moins un dispositif tel que décrit ci-dessus.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue très schématique d'un dispositif selon l'invention d'entraînement d'au moins une roue d'un train d'atterrissage d'aéronef ;
[Fig.2] la figure 2 est une vue très schématique en perspective d'un réducteur à lignes intermédiaires de transmission ;
[Fig.3] la figure 3 est une vue schématique en perspective d'un mode de réalisation du dispositif selon l'invention ;
[Fig.4] la figure 4 est une vue schématique en perspective d'un boîtier d'un réducteur mécanique du dispositif de la figure 3;
[Fig.5] la figure 5 est une vue schématique en coupe d'une partie du dispositif de la figure 3 ;
[Fig.6] la figure 6 est une vue similaire à celle de la figure 5 et montre une variante de réalisation du dispositif équipé d'un palier à roulement, et
[Fig.7] la figure 7 est une vue similaire à celle de la figure 5 et montre la variante de la figure 6 dont l'arbre flottant s'est déplacé grâce son rotulage dans le palier.

### Description détaillée de l'invention

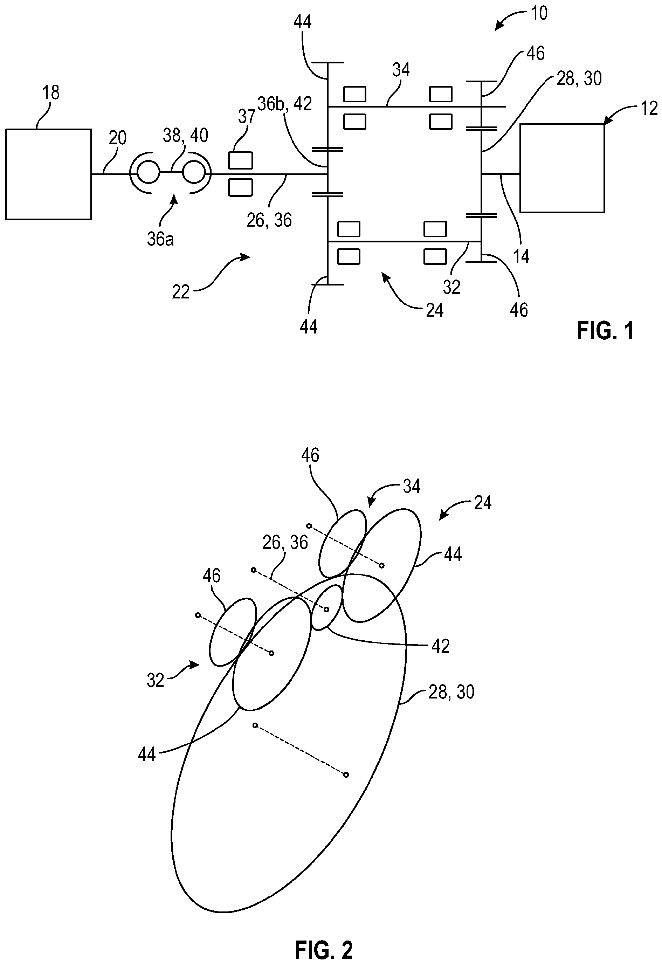

La figure 1 est une vue schématique d'un dispositif 10 d'entraînement d'au moins une roue 12 d'un train d'atterrissage d'aéronef.

La roue 12 est située à droite sur le dessin et est schématiquement représentée par un rectangle. De manière classique, elle peut comprendre une jante et un pneumatique entourant la jante. La jante est reliée ou accouplée à un arbre d'entraînement de jante 14.

La figure 1 représente la chaîne de transmission de puissance entre cet arbre de jante 14 et un moteur électrique 18 qui est situé à gauche sur le dessin et également schématiquement représenté par un rectangle. Ce moteur 18 comprend un arbre 20.

Selon l'invention, la chaîne de transmission de puissance entre les arbres 14 et 20 est formée par un système 22 comportant un réducteur 24 à deux lignes intermédiaires de transmission.

Comme cela est schématique représenté à la figure 2, un réducteur 24 de ce type comprend :
- une ligne d'entrée 26 qui est ici accouplée à l'arbre 20,
- une ligne de sortie 28 qui comprend une roue 30 portée par l'arbre de la jante 14, et
- deux lignes intermédiaires de transmission 32, 34 engrenées respectivement avec la ligne d'entrée 26 et la ligne de sortie 28.

Comme cela est schématiquement représenté à la figure 1, la ligne d'entrée 26 comprend de préférence un arbre flottant 36, c'est-à-dire un arbre qui est apte à subir des déplacements en fonctionnement du fait des tolérances de fabrication et de montage par exemple.

L'arbre flottant 36 comprend une première extrémité 36a qui comprend des cannelures 38 engagées dans des cannelures 40 complémentaires de l'arbre 14, et une seconde extrémité 36b opposée qui comprend un pignon 42 d'engrènement avec des roues 44 complémentaires des lignes intermédiaires 32, 34.

L'arbre flottant 36 est centré et guidé en rotation par au moins un palier 37 et est apte à rotuler à l'intérieur de ce palier. Les cannelures 38, 40 sont configurées pour autoriser ce rotulage et sont de préférences rectilignes et parallèles à l'axe longitudinal de l'arbre correspondant.

Le pignon 42 et les roues 44 sont de préférence à denture hélicoïdale, ce qui permet de réduire l'encombrement nécessaire pour transmettre la puissance et d'avoir une meilleure dynamique d'engrènement sur l'étage grande vitesse.

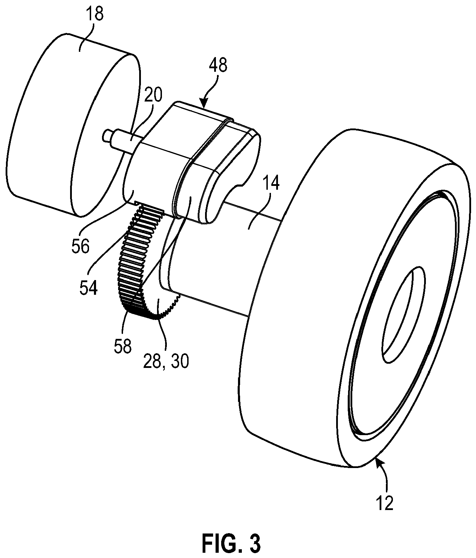

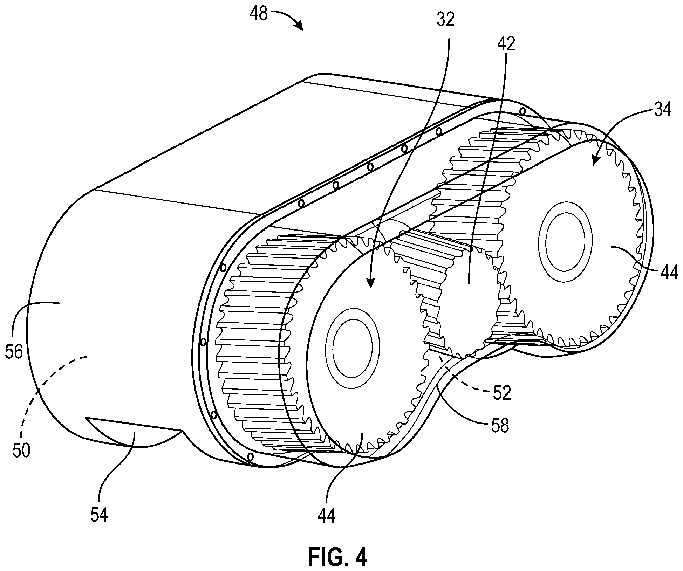

Les figures 3 à 5 représentent un mode de réalisation plus concret du dispositif.

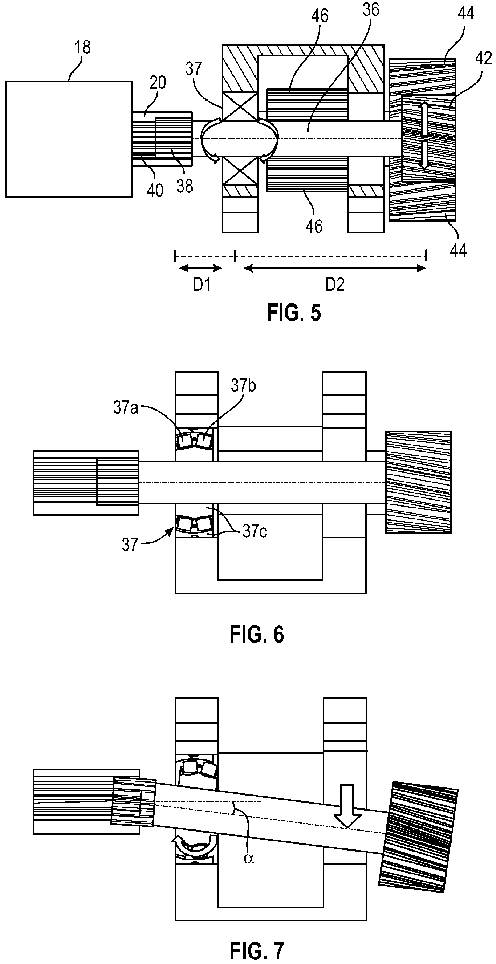

La figure 5 permet de constater tout d'abord que l'arbre flottant 36 est centré et guidé en rotation par un palier 37 qui est situé au voisinage des cannelures 38, 40, c'est-à-dire que la distance D1 entre le palier 37 et les cannelures 38, 40 est plus proche que la distance D2 entre le palier 37, d'une part, et le pignon 42 et les roues 44, d'autre part. L'arbre flottant 36 peut ainsi être considéré comme étant en porte-à-faux.

Le palier 37 est par exemple à roulement.

La figure 5 montre également que la roue 30 de l'arbre de jante 14 est engrené avec des pignons 46 complémentaires des lignes intermédiaires 32, 34.

La roue 30 et le pignon 46 sont de préférence à denture droite.

Les figures 3 à 5 montrent que les lignes intermédiaires 32, 34 et au moins une partie de la ligne d'entrée 26 sont logées dans un boîtier 48 qui est situé à la périphérie externe de la roue 30 de l'arbre d'entraînement 14.

Le boîtier 48 comprend deux chambres internes 50, 52 séparées l'une de l'autre de manière étanche. La chambre 50 renferme les pignons 46 des lignes intermédiaires 32, 34 et comprend au moins une ouverture 54 au droit de la roue 30 pour autoriser l'engrènement de la roue 30 et du pignon 46.

La chambre 52 renferme les pignons 42 et 44.

Dans l'exemple représenté, le boîtier 48 comprend un corps 56 et un couvercle 58 rapporté sur le corps 56. Le corps 56 définit la chambre 50 et le couvercle 58 définit la chambre 52.

L'isolation étanche des chambres 50, 52 est avantageuse dans la mesure où elle permet de lubrifier les engrènements de la chambre 50 indépendamment et distinctement de la chambre 52.

A titre d'exemple, la chambre 50 comprend une graisse de lubrification des engrènements (entre la roue 30 et les pignons 46) et la chambre 52 comprend une huile de barbotage des engrènements (entre le pignon 42 et les roues 44).

Les figures 6 et 7 montrent un exemple de réalisation du dispositif dans lequel le palier 37 est un palier à rouleaux et ici à deux rangées annulaires de rouleaux 37a, 37b. Le palier comprend deux bagues annulaires 37c entre lesquelles sont montées les deux rangées adjacentes de rouleaux.

La bague extérieure 37c comprend une piste sphérique de roulement commune aux deux rangées de rouleaux 37a, 37b. La bague intérieure 37c peut également comprendre des pistes adjacentes de roulement des deux rangées de rouleaux 37a, 37b. Le palier 27 est apte à fonctionner avec un désalignement entre l'axe de rotation de la bague extérieure et celui de sa bague intérieure

Ce palier 37 est apte à reprendre les efforts axiaux auxquels est soumis l'arbre flottant 36 en fonctionnement. Ces efforts sont par exemple transmis par la denture hélicoïdale du pignon 42 de l'arbre 36

Les figures 6 et 7 illustrent la capacité de rotulage de l'arbre flottant 36, rendu notamment possible par son montage en porte-à-faux. Dans le cas de la figure 6, l'arbre flottant 36 est aligné sur l'axe du palier 37. Dans le cas de la figure 7, l'arbre flottant s'est déplacé par rotulage dans le palier. La position décalée de l'arbre 37 est volontairement exagérée par rapport à sa position d'origine. Elle permet de constater que son axe peut être incliné d'un certain angle α vis-à-vis de l'axe du palier. Cet angle est par exemple compris entre 1 et 5°. Cela se traduit par un désalignement entre les axes des bagues 37c du palier 37.

## Revendications

1. Dispositif (10) d'entraînement d'au moins une roue (12) d'un train d'atterrissage d'aéronef, ce dispositif comportant :
- au moins une roue (12) de train d'atterrissage, cette roue (12) comportant une jante entraînée en rotation par un arbre d'entraînement de jante (14),
- un moteur (18) électrique comportant un arbre (20), et
- un système de transmission mécanique (22) entre l'arbre (20) du moteur (18) et l'arbre d'entraînement de jante (14), ledit système comprenant un réducteur mécanique (24) comportant :
- une ligne d'entrée (26) accouplée à l'arbre (20) du moteur (18) et comportant un pignon (42) menant,
- une ligne de sortie (28) comportant une roue (30) menée et portée par ledit arbre d'entraînement de jante (14), et
- deux lignes intermédiaires (32, 34) de transmission comportant chacune une roue (44) menée par le pignon (42) de la ligne d'entrée (26) et un pignon (46) menant la roue (30) de l'arbre d'entraînement de jante (14) ; **caractérisé en ce que** la ligne d'entrée (26) comprend un arbre flottant (36) dont une première extrémité (36a) comprend des cannelures (38) engagées dans des cannelures (40) complémentaires de l'arbre (20) du moteur (18), et dont une seconde extrémité (36b) opposée comprend le pignon (42), ledit arbre flottant (36) étant centré et guidé en rotation par au moins un palier (37) et étant apte à rotuler à l'intérieur de ce palier (37).

2. Dispositif (10) selon la revendication précédente, dans lequel le palier (37) est situé au voisinage de ladite première extrémité (36a).

3. Dispositif (10) selon la revendication 1 ou 2, dans lequel le palier (37) est du type à roulement.

4. Dispositif (10) selon la revendication précédente, dans lequel le palier (37) comprend deux rangées annulaires de rouleaux (37a, 37b) et une bague extérieure qui comprend une piste sphérique de roulement commune aux deux rangées de rouleaux.

5. Dispositif (10) selon l'une des revendications précédentes, dans lequel les deux lignes intermédiaires (32, 34) et au moins une partie de la ligne d'entrée (26) sont logées dans un boîtier (48) qui est situé à la périphérie externe de la roue (30) de l'arbre d'entraînement de jante (14), ce boîtier (48) comportant au moins une ouverture (54) pour l'accouplement de cette roue (30) aux pignons (46) des lignes intermédiaires (32, 34).

6. Dispositif (10) selon l'ensemble des revendications 4 et 5, dans lequel le boîtier (48) comprend un corps (56) et un couvercle (58) rapporté sur le corps (56), le corps (56) définissant une première chambre (50) comportant lesdits pignons (44) des lignes intermédiaires (32, 34) et ladite ouverture (54) pour le passage de la roue (30) de l'arbre d'entraînement de jante (14), et le couvercle définissant une seconde chambre (52) comportant le pignon (42) de la ligne d'entrée (26) et les roues (44) des lignes intermédiaires (32, 42), lesdites première et seconde chambres (50, 52) étant étanches l'une par rapport à l'autre.

7. Dispositif (10) selon la revendication précédente, dans lequel la première chambre (50) comprend une graisse de lubrification des engrènements et la seconde chambre (52) comprend une huile de barbotage des engrènements.

8. Dispositif (10) selon l'une des revendications précédentes, dans lequel les cannelures (38) sont rectilignes et parallèles à un axe longitudinal de l'arbre flottant (36).

9. Dispositif (10) selon l'une des revendications précédentes, dans lequel le pignon (42) de l'arbre flottant (36) et les roues (44) des lignes intermédiaires (32, 34) sont à denture hélicoïdale.

10. Dispositif (10) selon l'une des revendications précédentes, dans lequel la roue de l'arbre d'entraînement de jante (14) et les pignons (46) des lignes intermédiaires (32, 34) sont à denture droite.

11. Aéronef comportant au moins un dispositif (10) selon l'une des revendications précédentes.

## Patentansprüche

1. Vorrichtung (10) zum Antreiben mindestens eines Rades (12) eines Luftfahrzeugfahrwerks, wobei diese Vorrichtung umfasst:
- mindestens ein Fahrwerksrad (12), wobei dieses Rad (12) eine Felge umfasst, die von einer Felgenantriebswelle (14) in Drehung angetrieben ist,
- einen Elektromotor (18), der eine Welle (20) umfasst, und
- ein mechanisches Kraftübertragungssystem (22) zwischen der Welle (20) des Motors (18) und der Felgenantriebswelle (14), wobei das System ein mechanisches Untersetzungsgetriebe (24) umfasst, das umfasst:
- eine Eingangslinie (26), die mit der Welle (20) des Motors (18) gekoppelt ist und ein Antriebsritzel (42) umfasst,
- eine Ausgangslinie (28), die ein angetriebenes Rad (30) umfasst, und das von der Felgenantriebswelle (14) getragen wird, und
- zwei Zwischenübertragungslinien (32, 34), die jeweils ein Rad (44), das von dem Ritzel (42) der Eingangslinie (26) angetrieben wird, und ein Antriebsritzel (46) des Rades (30) der Felgenantriebswelle (14) umfassen;
**dadurch gekennzeichnet, dass** die Eingangslinie (26) eine schwimmende Welle (36) umfasst, von der ein erstes Ende (36a) Nuten (38) umfasst, die in komplementäre Nuten (40) der Welle (20) des Motors (18) eingreifen, und von der ein entgegengesetztes zweites Ende (36b) das Ritzel (42) umfasst, wobei die schwimmende Welle (36) zentriert und in Drehung von mindestens einem Lager (37) geführt und dazu geeignet ist, in dem Inneren dieses Lagers (37) gelenkig zu sein.

2. Vorrichtung (10) nach dem vorstehenden Anspruch, wobei das Lager (37) in der Nähe des ersten Endes (36a) liegt.

3. Vorrichtung (10) nach Anspruch 1 oder 2, wobei das Lager (37) vom Rollenlagertyp ist.

4. Vorrichtung (10) nach dem vorstehenden Anspruch, wobei das Lager (37) zwei ringförmige Rollenreihen (37a, 37b) und einen Außenring umfasst, der eine sphärische Rollenlaufbahn umfasst, die den zwei Rollenreihen gemeinsam ist.

5. Vorrichtung (10) nach einem der vorstehenden Ansprüche, wobei die zwei Zwischenlinien (32, 34) und mindestens ein Teil der Eingangslinie (26) in einem Gehäuse (48) aufgenommen sind, das sich an dem Außenumfang des Rades (30) der Felgenantriebswelle (14) befindet, wobei dieses Gehäuse (48) mindestens eine Öffnung (54) zum Koppeln dieses Rades (30) mit den Ritzeln (46) der Zwischenlinien (32, 34) umfasst.

6. Vorrichtung (10) nach beiden Ansprüchen 4 und 5, wobei das Gehäuse (48) einen Körper (56) und einen Deckel (58), der auf dem Körper (56) angebaut ist, umfasst, wobei der Körper (56) eine erste Kammer (50) definiert, die die Ritzel (44) der Zwischenlinien (32, 34) und die Öffnung (54) für das Durchgehen des Rades (30) der Felgenantriebswelle (14) umfasst, und der Deckel eine zweite Kammer (52) definiert, die das Ritzel (42) der Eingangslinie (26) und die Räder (44) der Zwischenlinien (32, 42) umfasst, wobei die erste und die zweite Kammer (50, 52) voneinander abgedichtet sind.

7. Vorrichtung (10) nach dem vorstehenden Anspruch, wobei die erste Kammer (50) ein Schmierfett der Verzahnungen umfasst, und die zweite Kammer (52) ein Tauchschmieröl der Verzahnungen umfasst.

8. Vorrichtung (10) nach einem der vorstehenden Ansprüche, wobei die Nuten (38) geradlinig und zu einer Längsachse der schwimmenden Welle (36) parallel sind.

9. Vorrichtung (10) nach einem der vorstehenden Ansprüche, wobei das Ritzel (42) der schwimmenden Welle (36) und die Räder (44) der Zwischenlinien (32, 34) eine Schrägverzahnung aufweisen.

10. Vorrichtung (10) nach einem der vorstehenden Ansprüche, wobei das Rad der der schwimmenden Welle (14) und die Ritzel (46) der Zwischenlinien (32, 34) eine Geradverzahnung aufweisen.

11. Luftfahrzeug, das mindestens eine Vorrichtung (10) nach einem der vorstehenden Ansprüche umfasst.

## Claims

1. A device (10) for driving at least one wheel (12) of an aircraft landing gear, this device comprising:
- at least one landing gear wheel (12), this wheel (12) comprising a rim driven in rotation by a rim drive shaft (14),
- an electric motor (18) comprising a shaft (20), and
- a mechanical transmission system (22) between the shaft (20) of the motor (18) and the rim drive shaft (14), said system comprising a mechanical reduction gear (24) comprising:
- an input line (26) coupled to the shaft (20) of the motor (18) and comprising a driving pinion (42),
- an output line (28) comprising a driven wheel (30) and carried by said rim drive shaft (14), and
- two intermediate transmission lines (32, 34) each comprising a wheel (44) driven by the pinion (42) of the input line (26) and a pinion (46) driving the wheel (30) of the rim drive shaft (14);
**characterised in that** the input line (26) comprises a floating shaft (36), a first end (36a) of which comprises splines (38) engaged in complementary splines (40) of the shaft (20) of the motor (18), and a second, opposite end (36b) of which comprises the pinion (42), said floating shaft (36) being centred and guided in rotation by at least one bearing (37) and being able to swivel inside this bearing (37).

2. The device (10) according to the preceding claim, wherein the bearing (37) is located in the vicinity of said first end (36a).

3. The device (10) according to claim 1 or 2, wherein the bearing (37) is of the rolling type.

4. The device (10) according to the preceding claim, wherein the bearing (37) comprises two annular rows of rollers (37a, 37b) and an outer ring which comprises a spherical rolling track common to both rows of rollers.

5. The device (10) according to one of the preceding claims, wherein the two intermediate lines (32, 34) and at least part of the input line (26) are housed in a casing (48) which is located on the outer periphery of the wheel (30) of the rim drive shaft (14), this casing (48) comprising at least one opening (54) for coupling this wheel (30) to the pinions (46) of the intermediate lines (32, 34).

6. The device (10) according to both of claims 4 and 5, wherein the casing (48) comprises a body (56) and a cover (58) attached to the body (56), the body (56) defining a first chamber (50) comprising said pinions (44) of the intermediate lines (32, 34) and said opening (54) for the passage of the wheel (30) of the rim drive shaft (14), and the cover defining a second chamber (52) comprising the pinion (42) of the input line (26) and the wheels (44) of the intermediate lines (32, 42), said first and second chambers (50, 52) being sealed with respect to each other

7. The device (10) according to the preceding claim, wherein the first chamber (50) comprises a lubricating grease of the meshes and the second chamber (52) comprises an oil for the splashing of the meshes.

8. The device (10) according to one of the preceding claims, wherein the splines (38) are straight and parallel to a longitudinal axis of the floating shaft (36).

9. The device (10) according to one of the preceding claims, wherein the pinion (42) of the floating shaft (36) and the wheels (44) of the intermediate lines (32, 34) are helical toothing.

10. The device (10) according to one of the preceding claims, wherein the wheel of the rim drive shaft (14) and the pinions (46) of the intermediate lines (32, 34) are spurtoothing.

11. An aircraft comprising at least one device (10) according to one of the preceding claims.
